# FASCICULE DE BREVET EUROPEEN

(11) **EP 2 060 117 B1**
(45) Date de publication et mention de la délivrance du brevet: **18.05.2011**
(21) Numéro de dépôt: 07823456.4
(22) Date de dépôt: 29.08.2007
(51) Int. Cl.: H04N 7/16, H04N 7/167, G06F 12/14, H04L 12/22

(54) **PROCESSEUR DE SECURITE ET PROCEDE ET SUPPORT D'ENREGISTREMENT POUR CONFIGURER LE COMPORTEMENT DE CE PROCESSEUR**
SICHERHEITSPROZESSOR SOWIE AUFZEICHNUNGSVERFAHREN UND -MEDIUM ZUR KONFIGURATION DES VERHALTENS DIESES PROZESSORS
SECURITY PROCESSOR AND RECORDING METHOD AND MEDIUM FOR CONFIGURING THE BEHAVIOUR OF THIS PROCESSOR

(30) Priorité: 30.08.2006 FR 0607631
(43) Date de publication de la demande: 20.05.2009
(73) Titulaire: Viaccess, 92057 Paris La Defense Cedex (FR)
(72) Inventeur: DANOIS, Pascal, F-92210 Saint-cloud (FR); GRANET, Olivier, F-75019 Paris (FR); LE HENAFF, Sébastien, F-78330 Fontenay le Fleury (FR)
(74) Mandataire: Jacobson, Claude
(86) Numéro de dépôt international: PCT/FR2007/001411
(87) Numéro de publication internationale: WO 2008/025900

(56) Documents cités:
- WO-A-03/075233
- WO-A-03/077500
- WO-A-2004/008765
- WO-A-2004/049141

## Description

L'invention concerne un processeur de sécurité, un procédé et un support d'enregistrement pour configurer le comportement de ce processeur.

Il existe des processeurs de sécurité pour un décodeur propre à recevoir des signaux multimédias embrouillés à l'aide d'un mot de contrôle. Ces processeurs, tels qu'une carte à puce enfichable dans le décodeur, un module matériel intégré dans le décodeur ou un module logiciel s'exécutant dans le décodeur, comportent notamment une mémoire non réinscriptible, cette mémoire contenant un code d'une application qui, lorsqu'il est exécuté par un microprocesseur, permet d'exécuter un ensemble d'opérations nécessaires aux traitements des messages d'accès conditionnel transmis par un émetteur d'un opérateur pour en extraire le mot de contrôle nécessaire au désembrouillage du signal multimédia embrouillé.

Il existe plusieurs types de messages d'accès conditionnel, tels que les messages ECM (Entitlement Control Message) ou les messages EMM (Entitlement Management Message), d'autres types pouvant être définis. Des variantes sont possibles : il existe des messages EMM dont le contenu n'est pas crypté, appelés ici « message EMM non confidentiel», et des messages EMM confidentiels dont le contenu est crypté, appelés ici messages EMMC (Entitlement Management Message Confidential). Dans la suite de cette description et dans le jeu de revendications, à moins d'indications contraires, le terme « EMM » désigne aussi bien un message EMM non confidentiel qu'un message EMMC.

Le document WO 2004/049141 décrit une puce pour le traitement d'un contenu, ladite puce cc mprenant au moins un microprocesseur.

Il est parfois souhaitable de modifier le comportement du processeur de sécurité. Ceci est en particulier souhaitable lorsqu'un pirate a trouvé une faille sécuritaire dans le code de l'application et exploite cette faille pour obtenir frauduleusement le droit de désembrouiller le signal multimédia.

Dans ce sens, la demande de brevet publiée sous le numéro WO-03 075233 enseigne de ménager dans le code de l'application des ouvertures pour autoriser le branchement de portion de substitution de codes, appelée « PATCH ». Par exemple, le « PATCH » est exécuté par le microprocesseur en lieu et place d'une portion du code d'application présentant une faille sécuritaire. Ces « PATCH » permettent donc de modifier le comportement du processeur de sécurité.

Ces « PATCH » sont enregistrés dans une mémoire non volatile réinscriptible. Ainsi, il est possible de remplacer un « PATCH » par un autre « PATCH ». Cette possibilité est potentiellement dangereuse car elle pourrait être exploitée par un pirate pour implémenter dans la mémoire non volatile réinscriptible du processeur de sécurité, un PATCH pirate lui permettant, par exemple, d'autoriser frauduleusement le déchiffrement du mot de contrôle.

L'invention vise à résoudre ce problème.

L'invention a donc pour objet un processeur de sécurité dans lequel :
- le processeur de sécurité comporte au moins un premier verrou réinscriptible dont la valeur est basculable entre une première et une seconde valeurs prédéterminées en réponse à un message EMM,
- le code de l'application contient également une fonction de restriction apte à autoriser et, en alternance, à interdire, en réponse à la réception d'un même message ECM ou EMM et en fonction de la valeur du premier verrou, seulement une opération particulière du processeur de sécurité parmi l'ensemble des opérations nécessaires au traitement des messages ECM et EMM, tout en permettant au processeur de sécurité d'exécuter les autres opérations nécessaires au traitement des messages EMM et ECM qui n'ont pas été interdites, cette opération particulière étant choisie dans le groupe composé de :
   - l'utilisation d'une clé cryptographique enregistrée dans une mémoire du processeur de sécurité,
   - le traitement d'un paramètre contenu dans un message EMM ou ECM reçu, et
   - l'exécution d'une fonction élémentaire d'accès conditionnel du code de l'application, chaque fonction élémentaire d'accès conditionnel du code de l'application étant exécutée indépendamment des autres fonctions élémentaires d'accès conditionnel de sorte que la non exécution d'une fonction élémentaire d'accès conditionnel n'empêche pas l'exécution, par le microprocesseur, de l'une quelconque des autres fonctions élémentaires d'accès conditionnel.

Le comportement du processeur de sécurité ci-dessus, en réponse au même message EMM ou ECM, peut être modifié en faisant basculer la valeur du premier verrou entre sa première valeur et sa seconde valeur. Pour modifier le comportement de ce processeur de sécurité, il n'est donc pas nécessaire d'implémenter des portions de code de l'application dans une mémoire réinscriptible ce qui rend ce processeur de sécurité plus sûr. Il n'est pas non plus nécessaire de modifier les messages ECM ou EMM diffusés par la tête de réseau. Tout au plus, il est nécessaire de prévoir l'envoi d'un message EMM contenant un nouveau paramètre en réponse auquel le verrou bascule entre la première et la seconde valeur.

On remarquera également que ce processeur de sécurité présente au moins un des avantages suivant :
- interdire l'utilisation d'une clé cryptographique permet d'empêcher l'exécution d'une fonction élémentaire d'accès conditionnel lorsque celle-ci utilise une clé cryptographique particulière sans pour autant empêcher l'exécution de la même fonction lorsque celle-ci utilise une autre clé cryptographique ce qui augmente les possibilités de réglage du comportement du processeur de sécurité vis-à-vis des clés cryptographiques,
- interdire le traitement d'un paramètre d'un message EMM ou ECM empêche l'exécution d'une fonction élémentaire d'accès conditionnel qui aurait dû être déclenchée en réponse à la réception de ce paramètre sans pour autant empêcher le déclenchement de l'exécution de la même fonction élémentaire d'accès conditionnel pour traiter un autre paramètre reçu ce qui permet d'augmenter les possibilités de réglage du comportement du processeur de sécurité vis-à-vis des paramètres contenus dans les messages EMM et ECM,
- l'interdiction d'une fonction élémentaire d'accès conditionnel permet de désactiver définitivement ou temporairement une fonction élémentaire d'accès conditionnel présentant une faille sécuritaire ce qui peut être utilisé pour rendre le comportement du processeur de sécurité plus sûr.

Les modes de réalisation de ce processeur de sécurité peuvent comporter une ou plusieurs des caractéristiques suivantes :
- la mémoire comporte au moins un champ FIELDKEY associé à l'une des clés cryptographiques, ce champ FIELDKEY contenant plusieurs verrous, ces verrous correspondant chacun à une fonction élémentaire d'accès conditionnel respective, et la fonction de restriction est apte à autoriser et, en alternance, à interdire l'utilisation de cette clé cryptographique par une fonction élémentaire d'accès conditionnel en fonction de la valeur du verrou contenu dans le champ FIELDKEY et correspondant à cette fonction élémentaire d'accès conditionnel ;
- le processeur de sécurité contient au moins une liste choisie parmi les listes suivantes :
   - une liste FIELDPIEMM associée aux messages EMM non confidentiels, cette liste FIELDPIEMM contenant plusieurs verrous, ces verrous correspondant chacun à un paramètre respectif Pᵢ susceptible d'être contenu dans un message EMM non confidentiel,
   - une liste FIELDPIEMMC associée aux messages EMM confidentiels (Entitlement Management Message Confidential), cette liste FIELDPIEMMC contenant plusieurs verrous, ces verrous correspondant chacun à un paramètre respectif Pᵢ susceptible d'être contenu dans un message EMM confidentiel, et
   - une liste FIELDPIECM associée aux messages ECM, cette liste FIELDPIECM contenant plusieurs verrous, ces verrous correspondant chacun à un paramètre respectif Pᵢ susceptible d'être contenu dans un message ECM, et
      la fonction de restriction est apte à autoriser et, en alternance, à interdire le traitement d'un paramètre Pᵢ contenu dans un message reçu par le processeur de sécurité en fonction de la valeur du verrou correspondant à ce paramètre dans la liste associée à ce message ;
- le processeur de sécurité comporte une liste FIELDFCT associée aux fonctions élémentaires d'accès conditionnel, cette liste FIELDFCT contenant plusieurs verrous, ces verrous correspondant chacun à une fonction élémentaire d'accès conditionnel respective, et la fonction de restriction est apte à autoriser et, en alternance, à interdire l'exécution d'une fonction élémentaire d'accès conditionnel en fonction de la valeur du verrou de la liste FIELDFCT correspondant à cette fonction élémentaire d'accès conditionnel ;

- le processeur de sécurité comprend au moins un second verrou réinscriptible dont la valeur est basculable entre une première et une seconde valeurs prédéterminées en réponse à un message EMM, la fonction de restriction étant apte à autoriser ou en alternance à interdire en fonction de la valeur de ce second verrou :
   - l'utilisation de toute clé cryptographique nécessaire pour faire basculer la valeur du premier ou du second verrou,
   - le traitement de tout paramètre contenu dans un message EMM propre à faire basculer la valeur du premier ou du second verrou, et
   - l'exécution de toute fonction élémentaire d'accès conditionnel propre à faire basculer la valeur du premier ou du second verrous ;
- la fonction élémentaire d'accès conditionnel est différente d'une fonction d'inscription de nouveaux titres d'accès et d'une fonction d'inscription de nouvelles clés cryptographiques.

Ces modes de réalisation présentent en outre les avantages suivants :
- l'utilisation d'un champ FIELDKEY permet de rendre le processeur de sécurité plus sûr car il permet de rendre une clé cryptographique inutilisable par certaines fonctions élémentaires présentant une faille sécuritaire tout en conservant la possibilité d'utiliser cette même clé cryptographique pour d'autres fonctions élémentaires dépourvues de faille sécuritaire,
- l'utilisation d'au moins une liste choisie parmi les listes FIELDPIEMM, FIELDPIEMMC et FIELDPIECM permet d'accroître les possibilités de réglage du comportement du processeur de sécurité en autorisant ou en interdisant le traitement d'un même paramètre en fonction du message dans lequel il est contenu ; en outre l'utilisation d'au moins les listes FIELDPIEMM et FIELDPIEMMC permet d'imposer qu'un paramètre, pour qu'il soit traité, soit dans un EMM confidentiel, ce paramètre étant interdit dans la liste FIELDPIEMM et autorisé dans la liste FIELDPIEMMC,
- l'utilisation de la liste FIELDFCT permet de régler le comportement du processeur de sécurité fonction élémentaire d'accès conditionnel par fonction élémentaire d'accès conditionnel,
- empêcher l'utilisation de toute clé ou le traitement de tout paramètre où l'exécution de toute fonction susceptibles de modifier la valeur du premier ou du second verrou permet de figer définitivement le comportement du processeur de sécurité en ce qui concerne les opérations autorisées ou interdites par le premier verrou.

L'invention a également pour objet un procédé de configuration du processeur de sécurité ci-dessus dans lequel le procédé comporte :
- la fourniture d'au moins un premier verrou réinscriptible dont la valeur est basculable entre une première et une seconde valeurs prédéterminées en réponse à un message EMM,
- l'autorisation, en alternance, l'interdiction, en fonction de la valeur du premier verrou, de seulement une opération particulière du processeur de sécurité parmi l'ensemble des opérations nécessaires au traitement des messages ECM et EMM, tout en permettant au processeur de sécurité d'exécuter les autres opérations nécessaires au traitement des messages EMM et ECM qui n'ont pas été interdites, cette opération particulière étant choisie dans le groupe composé de :
   - l'utilisation d'une clé cryptographique enregistrée dans une mémoire du processeur de sécurité,
   - le traitement d'un paramètre contenu dans un message EMM ou ECM reçu, et
   - l'exécution d'une fonction élémentaire d'accès conditionnel par le processeur de sécurité, chaque fonction élémentaire d'accès conditionnel étant exécutée indépendamment des autres fonctions élémentaires d'accès conditionnel de sorte que la non exécution d'une fonction élémentaire d'accès conditionnel n'empêche pas l'exécution, par le processeur de sécurité, de l'une quelconque des autres fonctions élémentaires d'accès conditionnel.

Les modes de réalisation de ce procédé de configuration peuvent comporter une ou plusieurs des caractéristiques suivantes :
- la fourniture d'une mémoire contenant au moins un champ FIELDKEY associé à l'une des clés cryptographiques, ce champ FIELDKEY contenant plusieurs verrous, ces verrous correspondant chacun à une fonction élémentaire d'accès conditionnel respective, et l'autorisation et, en alternance, l'interdiction de l'utilisation de cette clé cryptographique associée au champ FIELDKEY par une fonction élémentaire d'accès conditionnel en fonction de la valeur du verrou qui est contenu dans le champ FIELDKEY et qui correspond à cette fonction élémentaire d'accès conditionnel ;
- la fourniture d'une mémoire contenant au moins une liste choisie parmi les listes suivantes :
   - une liste FIELDPIEMM associée aux messages EMM non confidentiels, cette liste FIELDPIEMM contenant plusieurs verrous, ces verrous correspondant chacun à un paramètre respectif Pᵢ susceptible d'être contenu dans un message EMM non confidentiel,
   - une liste FIELDPIEMMC associée aux messages EMM confidentiels (Entitlement Management Message Confidential), cette liste FIELDPIEMMC contenant plusieurs verrous, ces verrous correspondant chacun à un paramètre respectif Pᵢ susceptible d'être contenu dans un message EMM confidentiel, et
   - une liste FIELDPIECM associée aux messages ECM, cette liste FIELDPIECM contenant plusieurs verrous, ces verrous correspondant chacun à un paramètre respectif Pᵢ susceptible d'être contenu dans un message ECM, et l'autorisation et, en alternance, l'interdiction du traitement d'un paramètre Pᵢ contenu dans un message reçu par le processeur de sécurité en fonction de la valeur du verrou correspondant à ce paramètre dans la liste associée à ce message ;
- la fourniture d'une mémoire comportant une liste FIELDFCT associée aux fonctions élémentaires d'accès conditionnel, cette liste FIELDFCT contenant plusieurs verrous, ces verrous correspondant chacun à une fonction élémentaire d'accès conditionnel respective, et l'autorisation et, en alternance, l'interdiction de l'exécution d'une fonction élémentaire d'accès conditionnel en fonction de la valeur du verrou dans la liste FIELDFCT correspondant à cette fonction élémentaire d'accès conditionnel ;
- la configuration initiale par défaut de la valeur de chaque verrou pour que, en réponse à la réception du premier message EMM ou ECM diffusé par la tête de réseau, aucune opération particulière ne soit interdite ;

- la réception dans un même message EMM :
   - d'un premier paramètre déclenchant le basculement de la valeur du premier verrou pour autoriser une opération particulière du processeur de sécurité,
   - d'un deuxième paramètre déclenchant l'exécution de cette même opération particulière, et
   - d'un troisième paramètre déclenchant le basculement de la valeur du premier verrou pour interdire cette même opération particulière, et
      le traitement dans l'ordre par le processeur de sécurité du premier, du deuxième et du troisième paramètres ;
- la fonction élémentaire d'accès conditionnel est différente d'une fonction d'inscription de nouveaux titres d'accès et d'une fonction d'inscription de nouvelles clés cryptographiques.

Les modes de réalisation de ce procédé de configuration présentent en outre les avantages suivants :
- la configuration initiale de la valeur de chaque verrou pour autoriser l'ensemble des opérations nécessaires au traitement des messages ECM et EMM, accroît la sécurité du processeur de sécurité car un pirate pourra éventuellement modifier le comportement du processeur de sécurité uniquement pour interdire des opérations particulières, et
- autoriser une opération particulière puis, immédiatement après, exécuter cette opération particulière, puis immédiatement, après interdire cette opération particulière permet d'empêcher un pirate d'exploiter une faille sécuritaire dans cette opération particulière car l'exécution de cette opération particulière n'est rendue possible que pendant un très court laps de temps.

L'invention a également pour objet un support d'enregistrement d'informations comportant des instructions pour l'exécution du procédé de configuration ci-dessus lorsque ces instructions sont exécutées par un microprocesseur.

L'invention sera mieux comprise à la lecture de la description qui va suivre, donné uniquement à titre d'exemple non limitatif et faite en se référant aux dessins sur lesquels :
- la figure 1 est une illustration schématique de l'architecture d'un système de transmission de signaux multimédias embrouillés ;
- les figures 2 et 3 sont des illustrations schématiques de portion de trame de message EMM et ECM ;
- les figures 4, 5 et 6 sont des exemples de structure de données utilisées dans le système de la figure 1 ;
- la figure 7 est un organigramme d'un procédé de configuration du comportement d'un processeur de sécurité du système de la figure 1 ; et
- la figure 8 est une illustration schématique d'une portion d'une trame d'un message EMM de configuration.

Dans la suite de cette description, les caractéristiques et les fonctions bien connues de l'homme du métier ne sont pas décrites en détail.

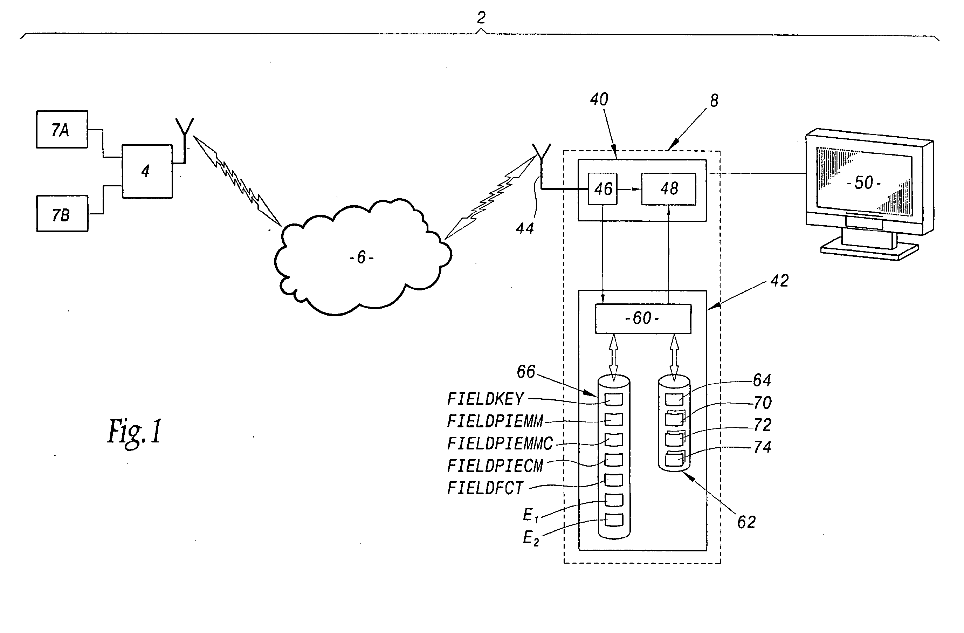

La figure 1 représente un système 2 de transmission de signaux multimédias embrouillés. Les signaux multimédias sont, par exemple, des signaux audiovisuels correspondant à des programmes audiovisuels de chaînes de télévision.

Le système 2 comporte un émetteur 4 de signaux multimédias embrouillés à l'aide d'un mot de contrôle CW à destination d'un grand nombre de récepteurs par l'intermédiaire d'un réseau 6 de transmission d'informations. L'émetteur 4 est connu sous le terme de « tête de réseau ».

Pour simplifier la figure 1, seul un récepteur 8 est représenté.

Le réseau 6 est, par exemple, un réseau hertzien tel qu'illustré ici ou un réseau câblé grande distance.

Ici, les signaux multimédias sont générés par deux opérateurs distincts 7A et 7B. Plus précisément, chaque opérateur 7A, 7B génère les signaux multimédias en clair, c'est-à-dire non embrouillés, et les transmet à l'émetteur 4 qui se charge de leur embrouillage avant leur diffusion par l'intermédiaire du réseau 6.

Dans la suite de cette description, les opérateurs 7A et 7B sont, respectivement, associés aux identifiants d'opérateurs SOID₁ et SOID₂.

L'émetteur 4 est apte à envoyer concomitamment aux signaux multimédias embrouillés des messages ECM et des messages EMM. Par exemple, les signaux multimédia embrouillés et les messages ECM et EMM sont multipléxés dans un même paquet d'informations.

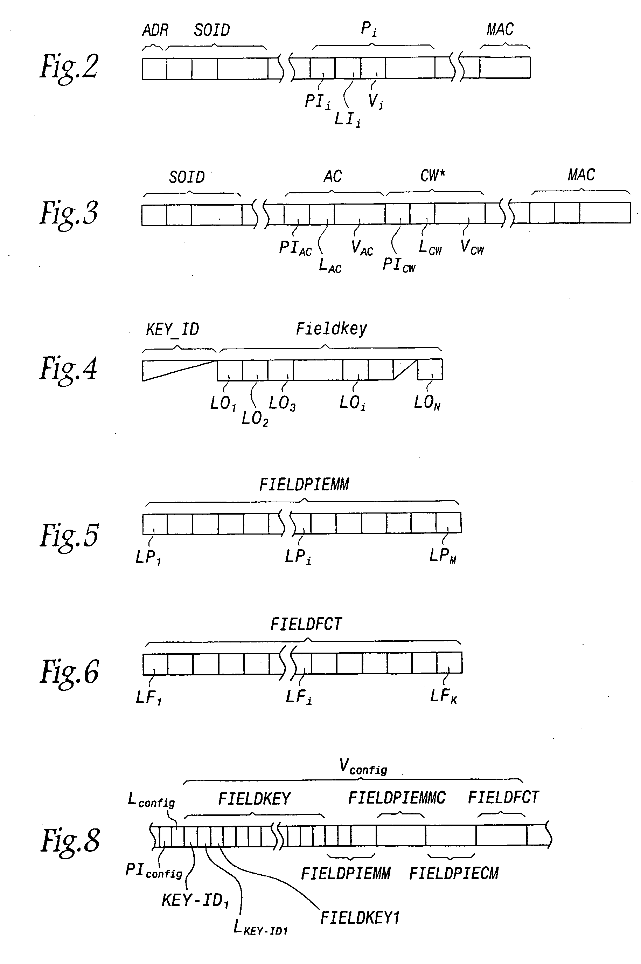

Les figures 2 et 3 représentent des exemples de structure de trame, respectivement, d'un message EMM et d'un message ECM conforme à la norme UTE C90-007.

La trame du message EMM débute par un champ ADR contenant un identifiant ADR d'un récepteur particulier ou d'un groupe de récepteurs. Dans le cas où le message EMM est adressé à l'ensemble des récepteurs du système 2, le champ ADR peut être omis.

Ensuite, le message EMM contient des paramètres Pᵢ destinés à configurer les récepteurs pour que ceux-ci puissent désembrouiller correctement les signaux multimédia pour lesquels un abonnement a été souscrit. Chacun de ces paramètres est codé en utilisant une structure TLV (Type Length Value). Dans ces conditions, chaque paramètre Pᵢ est formé par la juxtaposition de trois champs PIᵢ, LIᵢ et Vᵢ. Le champ PIᵢ contient un identifiant PIᵢ du paramètre Pᵢ. Le champ Lᵢ contient une valeur indiquant qu'elle est la longueur du champ Vᵢ. Le champ Vᵢ contient la valeur du paramètre Pᵢ.

Sur la figure 2, un paramètre SOID et un paramètre MAC, systématiquement présent dans les messages EMM, ont également été représentés. Le paramètre SOID contient l'identifiant SOID de l'opérateur diffusant ce message EMM.

Le paramètre MAC (Message Authentification Code) contient un code permettant de vérifier l'authenticité et l'intégrité du message EMM.

Les traits verticaux ondulés indiquent que seule une partie de la structure du message EMM est représentée sur la figure 2.

Contrairement au message EMM, la structure d'un message ECM ne contient pas de champ ADR puisqu'un message ECM s'adresse a priori à l'ensemble des récepteurs du système 2. Le message ECM comprend également plusieurs paramètres codés selon la structure TLV. Typiquement, le message ECM comprend un paramètre SOID et un paramètre MAC ayant les mêmes fonctionnalités que celles déjà décrites en regard de la figure 2.

Ensuite, le message ECM comprend un paramètre AC et un paramètre CW*. Le paramètre AC contient une condition d'accès aux signaux multimédias. Ce paramètre AC est ici identifié dans le message ECM par un identifiant PI_{AC}. Sa longueur est définie dans un champ L_{AC} et sa valeur est contenue dans un champ V_{AC}. Quand l'accès aux signaux multimédias dépend de plusieurs conditions, le message ECM peut contenir plusieurs paramètres AC.

Le paramètre CW* est destiné à contenir un cryptogramme CW* du mot de contrôle utilisé pour embrouiller les signaux multimédias. Ce cryptogramme CW* est généré par l'émetteur 4 en chiffrant le mot de contrôle CW à l'aide d'une clé d'exploitation Kₑ. Ici, ce paramètre CW* est identifié par un identifiant PI_{CW}, sa longueur est contenue dans un champ L_{CW} et sa valeur est contenue dans un champ V_{CW}.

Comme sur la figure 2, dans la figure 3, les traits verticaux ondulés indiquent que le message ECM peut contenir d'autres paramètres.

Le récepteur 8 est apte à recevoir les signaux multimédias embrouillés ainsi que les messages ECM et EMM. A cet effet, le récepteur 8 comporte un décodeur ou terminal 40 raccordé à un processeur de sécurité 42. Le processeur 42 est, par exemple, un processeur amovible telle qu'une carte à puce qui peut être insérée dans le décodeur 40. Le processeur 42 communique avec le décodeur 40 par l'intermédiaire d'une interface processeur/décodeur. Typiquement, l'interface est formée de connecteurs électriques, chaque connecteur ayant un élément mâle et un élément femelle chacun solidaire, soit du décodeur, soit du processeur. L'interface entre le décodeur 40 et le processeur 42 est, par exemple, conforme à la norme ISO 7816.

Le décodeur 40 est, ici, équipé d'une antenne 44 pour recevoir les différents signaux diffusés par l'émetteur 4. Cette antenne 44 est raccordée à un bloc 46 de démultiplexage des signaux et, éventuellement, de filtrage de ces signaux. En sortie de ce bloc 46, les signaux multimédias embrouillés sont envoyés à un désembrouilleur 48. Les messages EMM et ECM sont quant à eux envoyés au processeur 42.

Le désembrouilleur 48 est apte à désembrouiller les signaux multimédias embrouillés à l'aide du mot de contrôle CW déchiffré par le processeur 42.

Le décodeur 40 est raccordé à un dispositif 50 d'affichage des signaux multimédias désembrouillés tel que, par exemple, un poste de télévision.

Le processeur 42 est équipé :
- d'un microprocesseur électronique 60,
- d'une mémoire 62 non réinscriptible et non volatile contenant un code 64 d'une application qui, lorsqu'elle est exécutée par le microprocesseur 60, permet de traiter les messages ECM et EMM afin de permettre le déchiffrement du mot de contrôle nécessaire au désembrouillage des signaux multimédias reçus, et
- une mémoire réinscriptible 66 non volatile telle que par exemple une mémoire EEPROM (Electrically Erasable Programmable Read Only Memory).

L'application représentée par le code 64 est composée d'un ensemble de fonctionnalités élémentaires caractéristiques du traitement des messages d'accès conditionnel. Chacune de ces fonctionnalités élémentaires d'accès conditionnel peut être exécutée indépendamment les unes des autres. Ainsi, la non-exécution d'une telle fonctionnalité élémentaire n'empêche pas l'exécution, par le microprocesseur, de l'une quelconque de ces autres fonctionnalités élémentaires. Par simplification, dans la suite, on appellera « fonction élémentaire » une telle fonctionnalité élémentaire d'accès conditionnel.

A titre d'illustration la mémoire 62 contient une table 70 permettant d'identifier quels traitements du code doivent être exécutés pour réaliser cette fonction élémentaire. Le tableau ci-dessous donne des exemples de fonctions élémentaires. Les première et deuxième colonnes de ce tableau contiennent pour chaque fonction élémentaire, respectivement, un identifiant de la fonction élémentaire et une brève description de l'opération réalisée par cette fonction élémentaire.

**Tableau 1**

| | |
|---|---|
| IdF1 | Déchiffrement d'un cryptogramme CW* à l'aide d'une clé Kₑ |
| IdF2 | Vérification du paramètre MAC d'un message ECM |
| IdF3 | Déchiffrement d'un message EMM confidentiel |
| IdF4 | Modification du plafond autorisé en achat impulsif |
| IdF5 | Inscription d'un nouveau titre d'accès |
| IdF6 | Inscription ou modification d'une clé cryptographique Kₑ après déchiffrement de son cryptogramme à l'aide d'une clé Kₛ |
| IdF7 | Configuration de la valeur des verrous |
| IdF8 | Comparaison des conditions d'accès reçues aux titres d'accès contenus dans le processeur de sécurité |

Le code 64 contient également une fonction élémentaire particulière, dite « fonction de restriction », illustrée comme fonction Idf7 dans le tableau 1, qui sera décrite plus en détail en regard de la figure 1.

La mémoire 62 contient également une table 72 comportant les informations nécessaires pour déterminer quelle est la ou quelles sont les fonctions élémentaire(s) dont l'exécution doit être déclenchée pour traiter les données identifiées par un identifiant Pᵢ reçu.

Le tableau ci-dessous donne des exemples de paramètres Pᵢ susceptibles d'être contenu dans un message EMM ou ECM. La première colonne de ce tableau contient l'identifiant du paramètre Pᵢ et la deuxième colonne définit succinctement ce paramètre Pᵢ.

**Tableau 2**

| | |
|---|---|
| PI_{CW} | Contient le cryptogramme CW* dans un message ECM. Ce cryptogramme doit être déchiffré avec une clé Kₑ pour obtenir le mot de contrôle CW. |
| PI_{Ke} | Contient la clé Kₑ dans un message EMM. Ce cryptogramme doit être déchiffré par une clé Kₛ avant d'inscrire ou modifier la clé Kₑ. |
| PI_{config} | Dans un message EMM, contient les données de configuration de listes FIELDPIEMM, FIELDPIEMMC, FIELDPIECM, FIELDFCT et de champs FIELDKEY |
| PI_{SOID} | Contient l'identifiant SOID d'un opérateur pour identifier le contexte cryptographique de celui-ci nécessaire au traitement du message ECM ou EMM. |
| PI_{MAC} | Contient un code MAC (Message Authentification Code) dont le contrôle permet de vérifier l'authenticité et l'intégrité du message ECM ou EMM |
| PI_{TdA} | Contient des données d'inscription d'un nouveau titre d'accès |
| PI_{AC} | Contient des conditions d'accès à un signal multimédia à comparer aux titres d'accès présents dans le processeur de sécurité. |

Enfin, la mémoire 62 contient également une table 74 permettant de déterminer l'emplacement où est enregistrée une clé cryptographique d'un opérateur donné.

Ici, pour chaque opérateur 7A, 7B, le processeur 42 contient, par exemple, les clés listées dans le tableau suivant. La première colonne de ce tableau contient le nom de la clé, la deuxième colonne contient l'identifiant de cette clé et la troisième colonne contient une brève description de la fonction de cette clé.

**Tableau 3**

| | | |
|---|---|---|
| Kₑ | Kₑ-ID | Clé de déchiffrement du cryptogramme CW* d'un mot de contrôle CW |
| Kᵤ | Ku-ID | Clé permettant de déchiffrer un message EMM confidentiel |
| Kₛ | Kᵣ-ID | Clé de déchiffrement d'un cryptogramme Kₑ* de la clé Kₑ |

En tenant compte des notations définies dans le tableau 3, la table 74 contient les informations listées dans le tableau ci-dessous. La première colonne de ce tableau contient l'identifiant de la clé, la deuxième colonne contient l'identifiant de l'opérateur utilisant cette clé et la troisième colonne contient des informations par lesquelles le processeur peut trouver l'emplacement de cette clé dans la mémoire 66.

**Tableau 4**

| | | |
|---|---|---|
| Kₑ-ID | SOID₁ | @1-Kₑ |
| K_{c}-ID | SOID₂ | @2-Ke |
| Kᵤ-ID | SOID₁ | @1-Kᵤ |
| Kᵤ-ID | SOID₂ | @2-Kᵤ |
| Kᵣ-ID | SOID₁ | @1-Kᵣ |
| Kᵣ-ID | SOID₂ | @2-Kᵣ |

La mémoire 66 contient deux zones mémoires distinctes, appelées ici entité E₁ et entité E₂, dans lesquelles sont stockées les clés cryptographiques utilisées, respectivement, par les opérateurs 7A et 7B. De préférence, les titres d'accès aux signaux multimédias utilisés par les opérateurs 7A et 7B sont enregistrés uniquement dans leurs entités E₁ et E₂ respectives.

On remarquera que dans le processeur 42 la même clé, par exemple la clé Kₑ, n'est pas enregistrée au même endroit selon que celle-ci est contrôlée et utilisée par l'opérateur 7A ou par l'opérateur 7B. Cela permet de donner des valeurs différentes à cette clé Kₑ selon qu'elle est utilisée par l'un ou l'autre des opérateurs.

Enfin, la mémoire 66 contient également des listes FIELDKEY, FIELPIEMM, FIELDPIEMMC, FIELDPIECM et FIELDFCT.

La liste FIELDKEY associe à chaque clé cryptographique plusieurs verrous. Plus précisément, comme illustré sur la figure 4, pour chaque clé, la liste FIELDKEY contient :
- un champ KEY-ID contenant l'identifiant de la clé tel que défini dans le tableau 3, et
- un champ FIELDKEY contenant autant de verrous LOᵢ que d'identifiants de fonctions élémentaires faisant intervenir une clé. Ici, chaque verrou correspond à un champ destiné à contenir uniquement une valeur binaire telle que « 0 » ou « 1 ». Etant donné que ce verrou est contenu dans la mémoire 66, celui-ci est réinscriptible et sa valeur peut être basculée de la valeur « 0 » à la valeur « 1 » et vice versa.

Ici, les verrous LOᵢ sont disposés les uns après les autres dans des zones de mémoire contiguës et successives de sorte que la position d'un verrou permet d'identifier à quelle fonction élémentaire il correspond. Par exemple, le verrou LOᵢ à la ième position est uniquement associée à un seul identifiant IdFi d'une fonction élémentaire et vice versa.

Ici, lorsqu'un verrou LOᵢ contient la valeur « 0 » cela signifie que l'utilisation de la clé identifiée par KEY-ID par la fonction élémentaire correspondant à ce verrou LOᵢ est autorisée. Dans le cas contraire où le verrou LOᵢ comporte la valeur « 1 », la fonction élémentaire correspondant à ce verrou ne peut pas utiliser cette clé cryptographique.

La liste FIELDPIEMM illustrée sur la figure 5 contient des verrous LPᵢ pour indiquer, pour chaque paramètre Pᵢ susceptible d'être contenu dans un message EMM non confidentiel, si son traitement par le processeur 42 est autorisé ou interdit. Par exemple, la liste FIELDPIEMM contient autant de verrous LPᵢ que de paramètres Pᵢ susceptibles d'être reçus. Comme pour la liste FIELDKEY, la valeur de chaque verrou est basculable entre la valeur « O » et la valeur « 1 » et vice versa. La liste FIELDPIEMM est réalisée par une succession de champs contenant chacun une valeur binaire et correspondant chacun à un verrou LPᵢ. La position du verrou LPᵢ dans la liste FIELDPIEMM permet de déterminer quel est l'unique paramètre Pᵢ correspondant à ce verrou. On notera en particulier que la liste FIELDPIEMM contient ici un verrou LP_{config} correspondant au paramètre P_{config} contenant les informations nécessaires à la configuration de chacun des verrous. La valeur « 0 » du verrou LPᵢ signifie que le traitement du paramètre Pᵢ correspondant à ce verrou est autorisé. La valeur « 1 » signifie que le traitement du même paramètre Pᵢ est interdit.

La liste FIELDPIEMMC contient des verrous LCᵢ pour indiquer quels sont les paramètres, susceptibles d'être contenus dans un message EMMC (Entitlement Management Message Confidential), qui doivent être traités par le processeur 42. On rappelle qu'un message EMMC est identique à un message EMM à l'exception du fait qu'une partie de ses paramètres est chiffrée à l'aide d'une clé Kᵤ prédéfinie. Chaque verrou LCᵢ correspond à un seul paramètre Pᵢ. La liste FIELDPIEMMC comprend également un verrou LC_{config} correspondant au paramètre P_{config}.

La liste FIELDPIECM contient des verrous LEᵢ pour indiquer quels sont les paramètres d'un message ECM dont le traitement est autorisé ou interdit par le processeur 42. Chaque verrou LEᵢ correspond à un seul paramètre Pᵢ.

Par exemple, la structure des listes FIELDPIEMMC et FIELDPIECM est identique à celle décrite en regard de la figure 5 à l'exception que les verrous sont notés, respectivement, LCᵢ et LEᵢ. La signification des valeurs « 0 » et « 1 » pour ces verrous LCᵢ et LEᵢ est la même que pour le verrou LPᵢ.

La liste FIELDFCT contient des verrous LFᵢ aptes à indiquer quelles sont les fonctions élémentaires dont l'exécution est autorisée ou au contraire interdite à l'intérieur du processeur 42. Par exemple, la structure de cette liste FIELDFCT représentée sur la figure 6 contient autant de verrous LFᵢ que d'identifiants de fonctions élémentaires contenus dans le tableau 1 de sorte que chaque verrou correspond à une seule fonction élémentaire. On rappelle que par « fonction élémentaire » on entend ici une fonctionnalité élémentaire d'accès conditionnel. La structure de la liste FIELDFCT est similaire à la structure décrite en regard de la figure 5. Ainsi, la position du verrou LFᵢ permet de déterminer quel est l'unique identifiant IdFᵢ correspondant à ce verrou. Ici, lorsque le verrou LFᵢ prend la valeur « 0 » l'exécution de la fonction élémentaire correspondante est autorisée. Lorsque la valeur de ce même verrou prend la valeur « 1 », l'exécution de la fonction élémentaire correspondante est interdite. Dans ce cas, soit aucune fonction n'est exécutée, soit une fonction de remplacement est automatiquement exécutée en lieu et place de la fonction élémentaire interdite. Le code de cette fonction de remplacement est contenu dans la mémoire 62. Ici, la fonction de remplacement est systématiquement conçue pour être plus sûre que la fonction élémentaire qu'elle remplace éventuellement. Par exemple, la fonction de remplacement comporte systématiquement moins d'instructions que la fonction élémentaire qu'elle remplace.

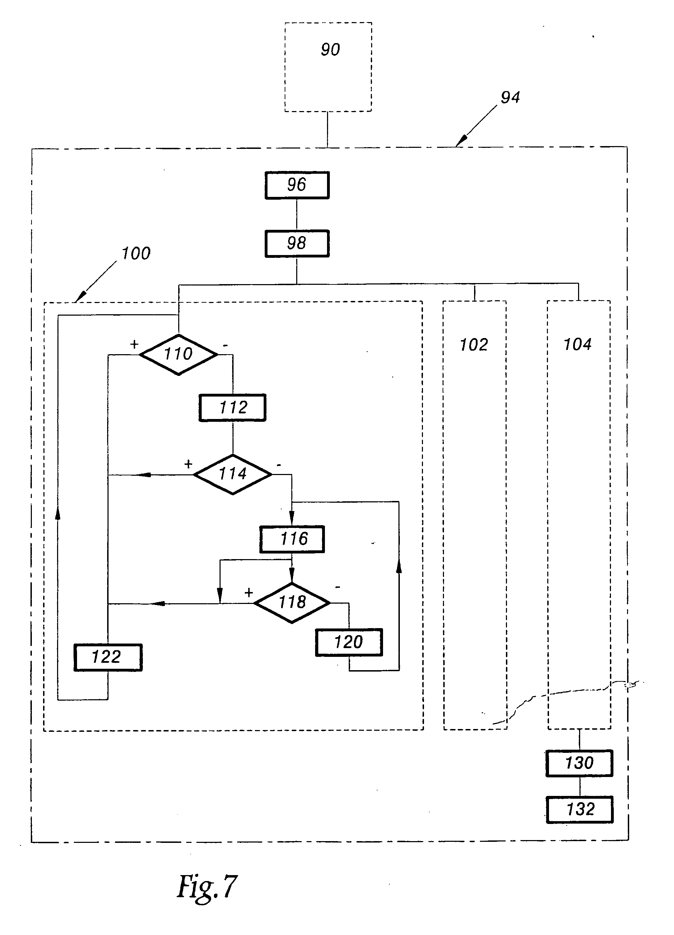

Le fonctionnement du système 2 va maintenant être décrit en regard du procédé de la figure 7.

Initialement, lors d'une phase 90 de personnalisation, le processeur 42 est configuré par l'intermédiaire d'une interface spéciale telle que par exemple une interface JTAG (Joint Test Action Group) ou par l'intermédiaire de la même interface que celle utilisée pour le connecter au décodeur 40. La phase de personnalisation se déroule dans un milieu sécurisé et en particulier, les différentes commandes de configuration transmises au processeur 42 ne sont jamais transmises par l'intermédiaire d'un réseau WAN (Wide Avea Network). Pendant la phase 90, une unité de configuration indépendante de l'émetteur 4 est utilisée pour initialiser la valeur de chacun des verrous typiquement à la valeur « 0 ».

Une fois la phase de personnalisation achevée, le processeur 42 est distribué puis inséré dans un décodeur d'un abonné. Une phase d'utilisation 94 débute alors.

Lors de la phase 94, le processeur 42 traite les messages EMM et ECM transmis par l'émetteur 4 de manière à être capable d'extraire de ces messages le mot de contrôle CW nécessaire pour désembrouiller les signaux multimédias embrouillés reçus.

Au cours de la phase d'utilisation, lors d'une étape 96, un message EMM de configuration est transmis au processeur 42 par l'émetteur 4. Ce message de configuration contient un paramètre P_{config} de configuration. Un exemple de structure de ce paramètre P_{config} est représenté sur la figure 8. Ce paramètre P_{config} est codé selon la structure TLV. Il contient donc un champ contenant l'identifiant PI_{config} indiquant que les données qui suivent sont des données de configuration des listes FIELDKEY, FIELDPIEMM, FIELDPIEMMC, FIELDPIECM et FIELDFCT. Le paramètre P_{config} contient également un champ L_{config} et un champ V_{config}. Le champ L_{config} indique la longueur du champ V_{config}. Le champ V_{config} contient l'ensemble des informations nécessaires pour mettre à jour les valeurs des verrous des différentes listes contenues dans la mémoire 66. Les différentes informations sont par exemple ici elles-mêmes codées en utilisant la structure TLV. Ainsi, le champ V_{config} se divise en cinq portions respectivement FIELDKEY, FIELDPIEMM, FIELDPIEMMC, FIELDPIECM et FIELDFCT. Chacune de ces sections contient respectivement les informations nécessaires pour faire basculer la valeur de chacun des verrous LOᵢ, LPᵢ, LCᵢ, LEᵢ et LFᵢ.

Lors d'une étape 98, en réponse à la réception du message EMM de configuration, l'exécution de la fonction de configuration des valeurs des différents verrous est déclenchée. Ainsi, lors de l'étape 98, la valeur de chacun des verrous est réglée en fonction des informations contenues dans le champ V_{config}.

Ensuite, si le processeur 42 reçoit un message EMM non confidentiel ou un message EMMC le processeur procède, respectivement, à des étapes 100 et 102 de gestion des droits d'accès et des clés cryptographiques. Si le processeur 42 reçoit un message ECM, il procède alors à une étape 104 d'extraction du mot de contrôle.

Au début de l'étape 100, lors d'une opération 110, le microprocesseur 60 exécute la fonction de restriction pour déterminer si le traitement du premier paramètre Pᵢ reçu est interdit. Pour ce faire, lors de l'étape 110, la fonction de restriction consulte la liste FIELDPIEMM et vérifie si le verrou correspondant à ce paramètre Pᵢ a la valeur « 1 ». Dans la négative, lors d'une étape 112, le processeur 42 identifie quelle est la fonction élémentaire dont l'exécution doit être déclenchée pour traiter le paramètre Pᵢ. A cet effet, la table 72 est utilisée.

Ensuite, lors d'une opération 114, le microprocesseur 60 exécute une nouvelle fois la fonction de restriction pour déterminer si l'exécution de la fonction élémentaire identifiée lors de l'étape 112 est interdite. A cet effet, lors de l'étape 114, la liste FIELDFCT est utilisée. Plus précisément, lors de l'opération 114, le processeur 42 vérifie si la valeur du verrou correspondant à la fonction élémentaire identifiée a la valeur « 1 ». Dans la négative, l'exécution de cette fonction élémentaire est autorisée et le procédé se poursuit par une opération 116 d'exécution de cette fonction élémentaire.

On suppose ici que lors de l'exécution de cette fonction élémentaire, celle-ci tente d'accéder à une clé cryptographique dans l'entité Eᵢ correspondant à l'identifiant SOIDᵢ reçu.

A chaque tentative d'accès à une clé cryptographique, lors d'une opération 118, le microprocesseur exécute la fonction de restriction pour vérifier si la fonction élémentaire actuellement exécutée est autorisée ou non à utiliser la clé à laquelle elle tente d'accéder. A cet effet, lors de l'opération 118, la liste FIELDKEY est utilisée. Plus précisément, lors de l'opération 118, le processeur 42 vérifie si la valeur du verrou associé à l'identifiant ID-KEY de cette clé et correspondant à cette fonction élémentaire est égale à « 1 ». Dans la négative, lors d'une opération 120, l'accès à cette clé cryptographique est autorisé et le procédé retourne à l'opération 116 où la fonction élémentaire continue à s'exécuter.

Une fois que l'opération 116 est complètement exécutée, ou si lors de l'une des opérations 110, 114 ou 118, la valeur du verrou testé est égale à « 1 », alors le procédé se poursuit par une opération 122 d'arrêt immédiat des traitements déclenchés par le paramètre Pᵢ reçu. De plus, dans le cas où l'on procède à l'opération 122, car la valeur de l'un des verrous testés est égale à « 1 », une indication d'erreur peut être émise. Dans ce mode de réalisation, aucune fonction de remplacement n'est exécutée si la valeur du verrou testé est également à « 1 ».

Après l'opération 122, le procédé retourne à l'opération 110 pour traiter le paramètre Pᵢ suivant contenu dans le même message EMM.

Les étapes 110 à 122 sont réitérées pour tous les paramètres Pᵢ du message EMM reçu.

Par exemple, en ajustant la valeur des verrous LOᵢ, LPᵢ et LFᵢ, il est possible d'obtenir les comportements suivants du processeur de sécurité :
- le paramètre P_{Ke} contenant le cryptogramme d'une nouvelle clé Kₑ n'est pas traité si la valeur du verrou LP_{Ke} est égale à « 1 » ; il n'est alors pas possible de mettre à jour une clé de déchiffrement des mots de contrôle.
- le paramètre P_{TdA} contenant des données pour modifier ou inscrire un nouveau titre d'accès à un signal multimédia n'est pas traité si la valeur du verrou LP_{TdA} est égale à « 1 », ; il n'est ainsi pas possible d'inscrire ou de mettre à jour un abonnement.
- l'utilisation de la clé Kₛ pour déchiffrer le cryptogramme de la clé Kₑ n'est pas autorisée pour certaines fonctions élémentaires et peut l'être pour d'autres fonctions élémentaires,
- la modification du plafond autorisé en achat impulsif, l'inscription d'un nouveau titre d'accès ou l'inscription ou la modification d'une clé cryptographique sont interdites si la valeur du verrou LFᵢ correspondante est égale à « 1 ».

On notera également que l'exécution de la fonction élémentaire propre à configurer la valeur des verrous peut elle-même être interdite si la valeur du verrou LP_{config} ou LF_{config} est égale à « 1 ». Ainsi, si le message EMM reçu contient le paramètre P_{config}, et que la valeur du verrou LP_{config} ou LF_{config} est égale à « 1 », alors la modification de la valeur des verrous est interdite de sorte que le comportement du processeur 42 est définitivement figé.

L'étape 102 est, par exemple, identique à l'étape 100 à l'exception que l'on procède d'abord à un déchiffrement du message EMMC à l'aide de la clé Kᵤ si un tel déchiffrement est autorisé, et que la liste FIELDPIEMMC est utilisée en lieu et place de la liste FIELDPIEMM.

Le fait d'utiliser deux listes différentes FIELDPIEMM et FIELDPIEMMC permet d'obtenir un comportement différent du processeur 42 si celui-ci traite un message EMM non confidentiel ou un message EMMC.

Lors de l'étape 104, la fonction de restriction est mise en oeuvre d'une façon similaire à ce qui a été décrit en regard de l'étape 100 à l'exception du fait que le message traité est un message ECM et que par conséquent la liste FIELDPIECM est utilisée en lieu et place de la liste FIELDPIEMM.

Ainsi, il est possible d'empêcher le déchiffrement du cryptogramme CW* en jouant sur la valeur d'un ou de plusieurs des verrous suivants :
- un verrou LO_{CW} associé à la clé Kₑ et correspondant à la fonction élémentaire de déchiffrement du cryptogramme du mot de contrôle,
- un verrou LE_{CW} de la liste FIELDPIECM correspondant au paramètre CW*, ou
- un verrou LF_{CW} de la liste FIELDFCT correspondant à la fonction élémentaire de déchiffrement du cryptogramme CW*.

Cela peut être utile lorsqu'il a été déterminé que le processeur 42 est utilisé d'une façon frauduleuse.

Lors de l'étape 104, il est également possible d'empêcher la comparaison de conditions d'accès particulières contenues dans un message ECM reçu aux titres d'accès mémorisés dans le processeur de sécurité en jouant sur la valeur d'un des verrous suivants :
- un verrou LE_{AC} de la liste FIELDPIECM correspondant au paramètre AC d'une condition particulière, ou
- un verrou LF_{AC} de la liste FIELDFCT correspondant à la fonction élémentaire de comparaison des conditions d'accès à des titres d'accès.

Cela peut être utile pour interdire le désembrouillage de certains signaux multimédias par le récepteur 8.

Toutefois, dans le cas normal, à l'issue de la phase 104, le mot de contrôle est déchiffré puis fourni au désembrouilleur 48 qui désembrouille les signaux multimédias reçus lors d'une étape 130.

Les signaux multimédias désembrouillés sont ensuite affichés en clair par l'écran 50, lors d'une étape 132.

Une mise en oeuvre judicieuse du procédé ci-dessus consiste à envoyer dans un même message EMM :
- un premier paramètre P_{config} pour faire basculer la valeur d'un verrou LOₚ ou LCₚ ou LEₚ ou LFₚ à la valeur « 0 », immédiatement suivi,
- d'un paramètre déclenchant une opération qui ne peut être menée à bien si la valeur du verrou modifié par le premier paramètre P_{config} a été basculé à « 0 », et immédiatement suivi
- d'un deuxième paramètre P_{config} permettant de basculer la valeur du verrou modifié par le premier paramètre P_{config} en sens inverse.

Ainsi, une opération particulière du processeur 42 est uniquement autorisée pendant un laps de temps très court. De plus, le processeur de sécurité tel que le processeur 42 traite généralement les paramètres Pᵢ dans leur ordre d'arrivée et ne permet pas un traitement multitâche de plusieurs paramètres simultanément. Dans ces conditions, la réception du message EMM décrit ci-dessus empêche d'exploiter une éventuelle faille sécuritaire dans cette opération particulière. En effet, avant la réception de ce message EMM, l'opération particulière ne peut pas être exécutée étant donné que la valeur du verrou est égale à « 1 ». Ensuite, lorsque la valeur du verrou est basculée à « 0 », et étant donné que le processeur 42 exécute cette opération immédiatement après la modification de la valeur du verrou, il n'est pas possible d'intercaler un autre traitement destiné à exploiter la faille sécuritaire de cette opération. Ensuite, immédiatement à la fin de l'exécution de l'opération, la valeur du verrou est de nouveau basculée à « 1 » de sorte qu'il n'est plus possible de déclencher l'exécution de cette opération qui présente une faille sécuritaire. Dans ces conditions, il est possible d'exécuter une opération présentant une faille sécuritaire sans que cette faille sécuritaire puisse être exploitée par un pirate.

De nombreux autres modes de réalisation sont possibles. Par exemple, le processeur de sécurité 42 peut être inséré dans un module détachable de désembrouillage conforme à la norme EN 50 221. En variante, le processeur de sécurité est un module matériel rigidement intégré dans le décodeur ou dans le module détachable de désembrouillage. Ainsi ce décodeur ou ce module détachable ne forme avec le processeur de sécurité qu'une seule et même entité rigide.

Enfin, le processeur de sécurité peut également être un module logiciel exécuté par le décodeur ou par le module détachable. Dans ce dernier cas, le microprocesseur du processeur de sécurité est le même que celui utilisé par le décodeur ou le module détachable pour effectuer d'autres fonctions telles que le désembrouillage.

En variante, des verrous peuvent également être associés à chaque titre d'accès mémorisé dans le processeur de sécurité de manière à autoriser et, en alternance, à interdire l'accès à ces titres d'accès.

Dans une autre variante, un verrou LEᵢ positionné à la valeur « 0 » autorise (étape 110) la présence du paramètre Pᵢ concerné sous réserve que le code 64 de l'application l'autorise nativement. Il en est de même pour un verrou LPᵢ, LCᵢ, LOᵢ (étape 118) ou LFᵢ (étape 114). Par exemple, dans le cas où les listes FIELDPIEMM, FIELDPIEMMC et FIELDPIECM ont la même structure, certains paramètres Pᵢ désignés dans FIELDPIEMM ou FIELDEMMC, comme le paramètres pour déchiffrer un mot de contrôle, sont nativement interdits dans un message EMM ou EMMC par l'application elle-même. Dans un autre exemple, une version fonctionnelle d'un processeur de sécurité peut supporter la fonction élémentaire d'inscription de nouveaux titres d'accès alors qu'une autre version fonctionnelle, conçue comme jetable après l'accès à un seul contenu, ne la permet pas.

## Revendications

1. Processeur de sécurité pour un décodeur propre à recevoir un signal multimédia embrouillé à l'aide d'un mot de contrôle, ce signal étant diffusé par une tête de réseau, ce processeur comportant une mémoire (62) non réinscriptible contenant un code (64) d'une application qui, lorsqu'il est exécuté par un microprocesseur, permet d'exécuter un ensemble d'opérations nécessaires aux traitements de messages ECM (Entitlement Control Message) et de messages EMM (Entitlement Management Message) pour en extraire le mot de contrôle nécessaire au désembrouillage du signal multimédia embrouillé
**caractérisé en ce que** :
- le processeur de sécurité comporte au moins un premier verrou (LOᵢ, LPᵢ, LCᵢ, LEᵢ, LFᵢ) réinscriptible dont la valeur est basculable entre une première et une seconde valeurs prédéterminées en réponse à un message EMM ou ECM,
- le code de l'application contient également une fonction de restriction apte à autoriser et, en alternance, à interdire, en réponse à la réception d'un même message ECM ou EMM et en fonction de la valeur du premier verrou, seulement une opération particulière du processeur de sécurité parmi l'ensemble des opérations nécessaires au traitement des messages ECM et EMM, tout en permettant au processeur de sécurité d'exécuter les autres opérations nécessaires au traitement des messages EMM et ECM qui n'ont pas été interdites, cette opération particulière étant choisie dans le groupe composé de :
• l'utilisation d'une clé cryptographique enregistrée dans une mémoire du processeur de sécurité,
• le traitement d'un paramètre contenu dans un message EMM ou ECM reçu, et
• l'exécution d'une fonction élémentaire d'accès conditionnel du code de l'application, chaque fonction élémentaire d'accès conditionnel du code de l'application étant exécutée indépendamment des autres fonctions élémentaires d'accès conditionnel de sorte que la non exécution d'une fonction élémentaire d'accès conditionnel n'empêche pas l'exécution, par le microprocesseur, de l'une quelconque des autres fonctions élémentaires d'accès conditionnel.

2. Processeur selon la revendication 1, dans lequel :
- la mémoire comporte au moins un champ FIELDKEY associé à l'une des clés cryptographiques, ce champ FIELDKEY contenant plusieurs verrous, ces verrous correspondant chacun à une fonction élémentaire d'accès conditionnel respective, et
- la fonction de restriction est apte à autoriser et, en alternance, à interdire l'utilisation de cette clé cryptographique par une fonction élémentaire d'accès conditionnel en fonction de la valeur du verrou contenu dans le champ FIELDKEY et correspondant à cette fonction élémentaire d'accès conditionnel.

3. Processeur selon l'une quelconque des revendications précédentes, dans lequel :
- le processeur de sécurité contient au moins une liste choisie parmi les listes suivantes :
• une liste FIELDPIEMM associée aux messages EMM non confidentiels, cette liste FIELDPIEMM contenant plusieurs verrous, ces verrous correspondant chacun à un paramètre respectif Pᵢ susceptible d'être contenu dans un message EMM non confidentiel,
• une liste FIELDPIEMMC associée aux messages EMM confidentiels (Entitlement Management Message Confidential), cette liste FIELDPIEMMC contenant plusieurs verrous, ces verrous correspondant chacun à un paramètre respectif Pᵢ susceptible d'être contenu dans un message EMM confidentiel, et
• une liste FIELDPIECM associée aux messages ECM, cette liste FIELDPIECM contenant plusieurs verrous, ces verrous correspondant chacun à un paramètre respectif Pᵢ susceptible d'être contenu dans un message ECM,
- la fonction de restriction est apte à autoriser et, en alternance, à interdire le traitement d'un paramètre Pᵢ contenu dans un message reçu par le processeur de sécurité en fonction de la valeur du verrou correspondant à ce paramètre dans la liste associée à ce message.

4. Processeur selon l'une quelconque des revendications précédentes, dans lequel :
- le processeur de sécurité comporte une liste FIELDFCT associée aux fonctions élémentaires d'accès conditionnel, cette liste FIELDFCT contenant plusieurs verrous, ces verrous correspondant chacun à une fonction élémentaire d'accès conditionnel respective, et
- la fonction de restriction est apte à autoriser et, en alternance, à interdire l'exécution d'une fonction élémentaire d'accès conditionnel en fonction de la valeur du verrou de la liste FIELDFCT correspondant à cette fonction élémentaire d'accès conditionnel.

5. Processeur selon l'une quelconque des revendications précédentes dans lequel :
- le processeur de sécurité comprend au moins un second verrou réinscriptible dont la valeur est basculable entre une première et une seconde valeurs prédéterminées en réponse à un message EMM ou ECM,
- la fonction de restriction est apte à interdire en fonction de la valeur de ce second verrou :
• l'utilisation de toute clé cryptographique nécessaire pour faire basculer la valeur du premier ou du second verrou,
• le traitement de tout paramètre contenu dans un message EMM propre à faire basculer la valeur du premier ou du second verrou, et
• l'exécution de toute fonction élémentaire d'accès conditionnel propre à faire basculer la valeur du premier ou du second verrous.

6. Processeur selon l'une quelconque des revendications précédentes, dans lequel la fonction élémentaire d'accès conditionnel est différente d'une fonction d'inscription de nouveaux titres d'accès et d'une fonction d'inscription de nouvelles clés cryptographiques.

7. Procédé de configuration du comportement d'un processeur de sécurité pour un décodeur propre à recevoir un signal multimédia embrouillé à l'aide d'un mot de contrôle, ce signal étant diffusé par une tête de réseau, ce procédé comportant :
- la fourniture d'au moins un premier verrou réinscriptible dont la valeur est basculable entre une première et une seconde valeurs prédéterminées en réponse à un message EMM,
- l'autorisation et, en alternance, l'interdiction (110, 114, 118), en réponse au même message EMM ou ECM et en fonction de la valeur du premier verrou, de seulement une opération particulière du processeur de sécurité parmi l'ensemble des opérations nécessaires au traitement des messages ECM et EMM, tout en permettant au processeur de sécurité d'exécuter les autres opérations nécessaires au traitement des messages EMM et ECM qui n'ont pas été interdites, cette opération particulière étant choisie dans le groupe composé de :
• l'utilisation (120) d'une clé cryptographique enregistrée dans une mémoire du processeur de sécurité,
• le traitement (112) d'un paramètre contenu dans un message EMM ou ECM reçu, et
• l'exécution (116) d'une fonction élémentaire d'accès conditionnel par le processeur de sécurité, chaque fonction élémentaire d'accès conditionnel étant exécutée indépendamment des autres fonctions élémentaires d'accès conditionnel de sorte que la non exécution d'une fonction élémentaire d'accès conditionnel n'empêche pas l'exécution, par le processeur de sécurité, de l'une quelconque des autres fonctions élémentaires d'accès conditionnel.

8. Procédé selon la revendication 7, dans lequel le procédé comporte :
- la fourniture d'une mémoire contenant au moins un champ FIELDKEY associé à l'une des clés cryptographiques, ce champ FIELDKEY contenant plusieurs verrous, ces verrous correspondant chacun à une fonction élémentaire respective, et
- l'autorisation et, en alternance, l'interdiction de l'utilisation de cette clé cryptographique associée au champ FIELDKEY par une fonction élémentaire d'accès conditionnel en fonction de la valeur du verrou qui est contenu dans le champ FIELDKEY et qui correspond à cette fonction élémentaire d'accès conditionnel.

9. Procédé selon la revendication 7 ou 8, dans lequel le procédé comporte :
- la fourniture d'une mémoire contenant au moins une liste choisie parmi les listes suivantes :
• une liste FIELDPIEMM associée aux messages EMM non confidentiels, cette liste FIELDPIEMM contenant plusieurs verrous, ces verrous correspondant chacun à un paramètre respectif Pᵢ susceptible d'être contenu dans un message EMM non confidentiel,
• une liste FIELDPIEMMC associée aux messages EMM confidentiels (Entitlement Management Message Confidential), cette liste FIELDPIEMMC contenant plusieurs verrous, ces verrous correspondant chacun à un paramètre respectif Pᵢ susceptible d'être contenu dans un message EMM confidentiel, et
• une liste FIELDPIECM associée aux messages ECM, cette liste FIELDPIECM contenant plusieurs verrous, ces verrous correspondant chacun à un paramètre respectif Pᵢ susceptible d'être contenu dans un message ECM, et
- l'autorisation et, en alternance, l'interdiction du traitement d'un paramètre Pᵢ contenu dans un message reçu par le processeur de sécurité en fonction de la valeur du verrou correspondant à ce paramètre dans la liste associée à ce message.

10. Procédé selon l'une quelconque des revendications 7 à 9, dans lequel le procédé comporte :
- la fourniture d'une mémoire comportant une liste FIELDFCT associée aux fonctions élémentaires d'accès conditionnel, cette liste FIELDFCT contenant plusieurs verrous, ces verrous correspondant chacun à une fonction élémentaire d'accès conditionnel respective, et
- l'autorisation et, en alternance, l'interdiction de l'exécution d'une fonction élémentaire d'accès conditionnel en fonction de la valeur du verrou dans la liste FIELDFCT correspondant à cette fonction élémentaire d'accès conditionnel.

11. Procédé selon l'une quelconque des revendications 7 à 10, dans lequel le procédé comporte la configuration initiale par défaut de la valeur de chaque verrou pour que, en réponse à la réception du premier message EMM ou ECM diffusé par la tête de réseau, aucune opération particulière ne soit interdite.

12. Procédé selon l'une quelconque des revendications 7 à 11, dans lequel le procédé comporte :
- la réception dans un même message EMM :
• d'un premier paramètre déclenchant le basculement de la valeur du premier verrou pour autoriser une opération particulière du processeur de sécurité,
• d'un deuxième paramètre déclenchant l'exécution de cette même opération particulière, et
• d'un troisième paramètre déclenchant le basculement de la valeur du premier verrou pour interdire cette même opération particulière, et
- le traitement dans l'ordre par le processeur de sécurité du premier, du deuxième et du troisième paramètres.

13. Procédé selon l'une quelconque des revendications 7 à 12, dans lequel la fonction élémentaire d'accès conditionnel est différente d'une fonction d'inscription de nouveaux titres d'accès et d'une fonction d'inscription de nouvelles clés cryptographiques.

14. Support d'enregistrement d'informations contenant des instructions pour l'exécution d'un procédé de configuration conforme à l'une quelconque des revendications 7 à 13, lorsque ces instructions sont exécutées par un microprocesseur d'un processeur de sécurité.

## Claims

1. Security processor for a decoder suitable for receiving a multimedia signal scrambled with the aid of a control word, this signal being broadcast by a network head, this processor comprising a non-rewriteable memory (62) containing an application code (64) which, when it is executed by a microprocessor, makes it possible to execute a set of operations necessary for processing ECM messages (Entitlement Control Message) and EMM messages (Entitlement Management Message) so as to extract therefrom the control word necessary for descrambling the scrambled multimedia signal **characterized in that**,
- the security processor comprises at least one first rewriteable lock (LOᵢ, LPᵢ, LCᵢ, LEᵢ, LFᵢ) whose value can toggle between a first and a second predetermined value in response to an EMM or ECM message,
- the application code also contains a restriction function able to permit and, alternately, to prohibit, in response to the receipt of one and the same ECM or EMM message and as a function of the value of the first lock, only a particular operation of the security processor from the set of operations necessary for processing ECM and EMM messages, while allowing the security processor to execute the other operations that are necessary for processing the EMM and ECM messages and that have not been prohibited, this particular operation being chosen from the group made up of:
• the use of a cryptographic key recorded in a memory of the security processor,
• the processing of a parameter contained in an EMM or ECM message received, and
• the execution of an elementary conditional access function for the application code, each elementary conditional access function for the application code being executed independently of the other elementary conditional access functions so that the non-execution of an elementary conditional access function does not prevent the execution, by the microprocessor, of any one of the other elementary conditional access functions.

2. Processor according to Claim 1, wherein
- the memory comprises at least one field FIELDKEY associated with one of the cryptographic keys, this field FIELDKEY containing several locks, these locks each corresponding to a respective elementary conditional access function, and
- the restriction function is able to permit and, alternately, to prohibit the use of this cryptographic key by an elementary conditional access function as a function of the value of the lock contained in the field FIELDKEY and corresponding to this elementary conditional access function.

3. Processor according to any one of the preceding claims, wherein
- the security processor contains at least one list chosen from the following lists:
• a list FIELDPIEMM associated with the non-confidential EMM messages, this list FIELDPIEMM containing several locks, these locks each corresponding to a respective parameter Pᵢ capable of being contained in a non-confidential EMM message,
• a list FIELDPIEMMC associated with the confidential EMM messages (Entitlement Management Message Confidential) this list FIELDPIEMMC containing several locks, these locks each corresponding to a respective parameter Pᵢ capable of being contained in a confidential EMM message, and
• a list FIELDPIECM associated with the ECM messages, this list FIELDPIECM containing several locks, these locks each corresponding to a respective parameter Pᵢ capable of being contained in an ECM message,
- the restriction function is able to permit and, alternately, to prohibit the processing of a parameter Pᵢ containing a message received by the security processor as a function of the value of the lock corresponding to this parameter in the list associated with this message.

4. Processor according to any one of the preceding claims,
wherein
- the security processor comprises a list FIELDFCT associated with the elementary conditional access functions, this list FIELDFCT containing several locks, these locks each corresponding to a respective elementary conditional access function, and
- the restriction function is able to permit and, alternately, to prohibit the execution of an elementary conditional access function as a function of the value of the lock of the list FIELDFCT corresponding to this elementary conditional access function.

5. Processor according to any one of the preceding claims, wherein
- the security processor comprises at least one second rewriteable lock whose value can toggle between a first and a second predetermined value in response to an EMM or ECM message,
- the restriction function is able to prohibit as a function of the value of this second lock:
• the use of any cryptographic key necessary for toggling the value of the first or of the second lock,
• the processing of any parameter contained in an EMM message suitable for toggling the value of the first or second lock, and
• the execution of any elementary conditional access function suitable for toggling the value of the first or second locks.

6. Processor according to any one of the preceding claims, wherein the elementary conditional access function is different from a function for writing new access entitlements and a function for writing new cryptographic keys.

7. Method of configuring the behaviour of a security processor for a decoder suitable for receiving a multimedia signal scrambled with the aid of a control word, this signal being broadcast by a network head, this method comprising:
- the provision of at least one first rewriteable lock whose value can toggle between a first and a second predetermined value in response to an EMM message,
- the permitting and, alternately, the prohibiting (110, 114, 118), in response to the same EMM or ECM message and as a function of the value of the first lock, of only a particular operation of the security processor from the set of operations necessary for processing the ECM and EMM messages, while allowing the security processor to execute the other operations that are necessary for processing the EMM and ECM messages and which have not been prohibited, this particular operation being chosen from the group made up of:
• the use (120) of a cryptographic key recorded in a memory of the security processor,
• the processing (112) of a parameter contained in an EMM or ECM message received, and
• the execution (116) of an elementary conditional access function by the security processor, each elementary conditional access function being executed independently of the other elementary conditional access functions so that the non-execution of an elementary conditional access function does not prevent the execution, by the security processor, of any one of the other elementary conditional access functions.

8. Method according to Claim 7, wherein the method comprises:
- the provision of a memory containing at least one field FIELDKEY associated with one of the cryptographic keys, this field FIELDKEY containing several locks, these locks each corresponding to a respective elementary function, and
- the permitting and, alternately, the prohibiting of the use of this cryptographic key associated with the field FIELDKEY by an elementary conditional access function as a function of the value of the lock which is contained in the field FIELDKEY and which corresponds to this elementary conditional access function.

9. Method according to Claim 7 or 8, wherein the method comprises:
- the provision of a memory containing at least one list chosen from the following lists:
• a list FIELDPIEMM associated with the non-confidential EMM messages, this list FIELDPIEMM containing several locks, these locks each corresponding to a respective parameter Pᵢ capable of being contained in a non-confidential EMM message,
• a list FIELDPIEMMC associated with the confidential EMM messages (Entitlement Management Message Confidential) this list FIELDPIEMMC containing several locks, these locks each corresponding to a respective parameter Pᵢ capable of being contained in a confidential EMM message, and
• a list FIELDPIECM associated with the ECM messages, this list FIELDPIECM containing several locks, these locks each corresponding to a respective parameter Pᵢ capable of being contained in an ECM message, and
- the permitting and, alternately, the prohibiting of the processing of a parameter Pᵢ containing a message received by the security processor as a function of the value of the lock corresponding to this parameter in the list associated with this message.

10. Method according to any one of Claims 7 to 9, wherein the method comprises:
- the provision of a memory comprising a list FIELDFCT associated with the elementary conditional access functions, this list FIELDFCT containing several locks, these locks each corresponding to a respective elementary conditional access function, and
- the permitting and, alternately, the prohibiting of the execution of an elementary conditional access function as a function of the value of the lock in the list FIELDFCT corresponding to this elementary conditional access function.

11. Method according to any one of Claims 7 to 10, wherein the method comprises the initial configuring by default of the value of each lock so that, in response to the receipt of the first EMM or ECM message broadcast by the network head, no particular operation is prohibited.

12. Method according to any one of Claims 7 to 11, wherein the method comprises:
- the receipt in one and the same EMM message:
• of a first parameter triggering the toggling of the value of the first lock so as to permit a particular operation of the security processor,
• of a second parameter triggering the execution of this same particular operation, and
• of a third parameter triggering the toggling of the value of the first lock so as to prohibit this same particular operation, and
- the processing in order by the security processor of the first, second and third parameters.

13. Method according to any one of Claims 7 to 12, wherein the elementary conditional access function is different from a function for writing new access entitlements and a function for writing new cryptographic keys.

14. Medium for recording information containing instructions for the execution of a configuring method in accordance with any one of Claims 7 to 13, when these instructions are executed by a microprocessor of a security processor.

## Patentansprüche

1. Sicherheitsprozessor für einen Decoder, welcher ein verschlüsseltes Multimediasignal mit Hilfe eines Kontrollwortes empfangen kann, wobei das Signal von einer Kopfstelle gesendet wird, wobei der Prozessor einen nicht wiederbeschreibbaren Speicher (62) mit einem Code (64) einer Anwendung umfasst, welcher es ermöglicht, wenn er von einem Mikroprozessor ausgeführt wird, eine jeweils für die Verarbeitung von ECM-Nachrichten (Entitlement Control Message oder Berechtigungskontrollmitteilung) und von EMM-Nachrichten (Entitlement Management Message oder Berechtigungsverwaltungsmitteilung) erforderliche Vorgangsreihe auszuführen, um aus diesen das für die Entschlüsselung des verschlüsselten Multimediasignals erforderliche Kontrollwort abzurufen,
**dadurch gekennzeichnet, dass**
- der Sicherheitsprozessor mindestens eine erste, wiederbeschreibbare Zelle (LOᵢ, LPᵢ, LCᵢ, LEᵢ, LFᵢ) umfasst, deren Wert in Antwort auf eine EMM- oder ECM-Nachricht zwischen einem ersten und einem zweiten vorbestimmten Wert umschaltbar ist,
- der Code der Anwendung auch eine Beschränkungsfunktion enthält, welche geeignet ist, in Antwort auf den Empfang ein und derselben ECM- oder EMM-Nachricht und in Abhängigkeit von dem Wert der ersten Zelle aus der Gesamtheit der für die Verarbeitung der ECM- und EMM-Nachrichten erforderlichen Vorgänge für nur einen besonderen Vorgang des Sicherheitsprozessors eine Berechtigung bzw. Verweigerung zu erteilen und dabei die Ausführung der übrigen, für die Verarbeitung der EMM- und ECM-Nachrichten erforderlichen Vorgänge, für welche keine Verweigerung erfolgt ist, durch den Sicherheitsprozessor zu ermöglichen, wobei der besondere Vorgang aus der folgenden Gruppe ausgewählt wird:
• Verwendung eines in einem Speicher des Sicherheitsprozessors hinterlegten kryptografischen Schlüssels,
• Verarbeitung eines in einer empfangenen EMM- oder ECM-Nachricht enthaltenen Parameters, und
• Ausführung einer Basisfunktion eines bedingten Zugangs des Codes der Anwendung, wobei jede Basisfunktion eines bedingten Zugangs des Codes der Anwendung unabhängig von den anderen Basisfunktionen eines bedingten Zugangs ausgeführt wird, so dass durch die Nichtausführung einer Basisfunktion eines bedingten Zugangs die Ausführung irgendeiner anderen Basisfunktion eines bedingten Zugangs durch den Mikroprozessor nicht behindert wird.

2. Prozessor nach Anspruch 1, bei welchem
- der Speicher zumindest ein Feld FIELDKEY umfasst, das einem der kryptografischen Schlüssel zugeordnet ist, wobei das Feld FIELDKEY mehrere Zellen umfasst, wobei eine jede der Zellen jeweils einer Basisfunktion eines bedingten Zugangs entspricht, und
- die Beschränkungsfunktion geeignet ist, für die Verwendung des kryptografischen Schlüssels durch eine Basisfunktion eines bedingten Zugangs in Abhängigkeit von dem Wert der im Feld FIELDKEY enthaltenen und dieser Basisfunktion eines bedingten Zugangs entsprechenden Zelle eine Berechtigung bzw. Verweigerung zu erteilen.

3. Prozessor nach einem der vorhergehenden Ansprüche, bei welchem:
- der Sicherheitsprozessor zumindest eine aus den nachfolgenden Listen ausgewählte Liste enthält:
• eine den nicht vertraulichen EMM-Nachrichten zugeordnete Liste FIELDPIEMM, wobei die Liste FIELDPIEMM mehrere Zellen enthält, wobei eine jede der Zellen jeweils einem Parameter Pᵢ entspricht, der in einer nicht vertraulichen EMM-Nachricht enthalten sein kann,
• eine den vertraulichen EMM-Nachrichten zugeordnete Liste FIELDPIEMMC (Entitlement Management Message Confidential), wobei die Liste FIELDPIEMMC mehrere Zellen enthält, wobei eine jede der Zellen jeweils einem Parameter Pᵢ entspricht, der in einer vertraulichen EMM-Nachricht enthalten sein kann, und
• eine den ECM-Nachrichten zugeordnete Liste FIELDPIECM, wobei die Liste FIELDPIECM mehrere Zellen enthält, wobei eine jede der Zellen jeweils einem Parameter Pᵢ entspricht, der in einer ECM-Nachricht enthalten sein kann,
- wobei die Beschränkungsfunktion geeignet ist, für die Verarbeitung eines in einer von dem Sicherheitsprozessor empfangenen Nachricht enthalten Parameters Pᵢ in Abhängigkeit von dem Wert der Zelle, die diesem Parameter in der der betreffenden Nachricht zugeordneten Liste entspricht, eine Berechtigung bzw. Verweigerung zu erteilen.

4. Prozessor nach einer der vorhergehenden Ansprüche, bei welchem:
- der Sicherheitsprozessor eine den Basisfunktionen eines bedingten Zugangs zugeordnete Liste FIELDFCT umfasst, wobei die Liste FIELDFCT mehrere Zellen enthält, wobei eine jede der Zellen jeweils einer Basisfunktion eines bedingten Zugangs entspricht, und
- die Beschränkungsfunktion geeignet ist, für die Ausführung einer Basisfunktion eines bedingten Zugangs in Abhängigkeit von dem Wert der im Feld FIELDFCT enthaltenen und der Basisfunktion eines bedingten Zugangs entsprechenden Zelle eine Berechtigung bzw. Verweigerung zu erteilen.

5. Prozessor nach einem der vorhergehenden Ansprüche, bei welchem:
- der Sicherheitsprozessor zumindest eine zweite, wiederbeschreibbare Zelle umfasst, deren Wert in Antwort auf eine EMM- oder ECM-Nachricht zwischen einem ersten und einem zweiten vorbestimmten Wert umschaltbar ist,
- die Beschränkungsfunktion geeignet ist, in Abhängigkeit von dem Wert der zweiten Zelle Folgendes zu verweigern:
• die Verwendung jedes kryptografischen Schlüssels, der für das Umschalten des Wertes der ersten oder der zweiten Zelle erforderlich ist,
• die Verarbeitung jedes in einer EMM-Nachricht enthaltenen Parameters, der geeignet ist, den Wert der ersten oder der zweiten Zelle umzuschalten, und
• die Ausführung jeder Basisfunktion eines bedingten Zugangs, die dazu geeignet ist, den Wert der ersten oder der zweiten Zelle umzuschalten.

6. Prozessor nach einem der vorhergehenden Ansprüche, bei welchem sich die Basisfunktion eines bedingten Zugangs von einer Anmeldefunktion neuer Zugangsberechtigungen und einer Anmeldefunktion neuer kryptografischer Schlüssel unterscheidet.

7. Verfahren zur Konfiguration des Verhaltens eines Sicherheitsprozessors für einen Decoder, der dazu geeignet ist, ein verschlüsseltes Multimediasignal mit Hilfe eines Kontrollwortes zu empfangen, wobei das Signal von einer Kopfstelle gesendet wird, wobei das Verfahren umfasst:
- dass zumindest eine erste, wiederbeschreibbare Zelle bereitgestellt wird, deren Wert in Antwort auf eine EMM-Nachricht zwischen einem ersten und einem zweiten vorbestimmten Wert umschaltbar ist,
- dass in Antwort auf ein und dieselbe ECM- oder EMM-Nachricht und in Abhängigkeit von dem Wert der ersten Zelle, aus der Gesamtheit der für die Verarbeitung der ECM- und EMM-Nachrichten erforderlichen Vorgänge für nur einen besonderen Vorgang des Sicherheitsprozessors die Berechtigung bzw. Verweigerung (110, 114, 118) erteilt wird und dabei die Ausführung der übrigen, für die Verarbeitung der EMM- und ECM-Nachrichten erforderlichen Vorgänge, für welche keine Verweigerung erteilt wird, durch den Sicherheitsprozessor weiterhin ermöglicht wird, wobei der besondere Vorgang aus der folgenden Gruppe ausgewählt wird:
• Verwendung (120) eines in einem Speicher des Sicherheitsprozessors hinterlegten kryptografischen Schlüssels,
• Verarbeitung (112) eines in einer empfangenen EMM- oder ECM-Nachricht enthaltenen Parameters, und
• Ausführung (116) einer Basisfunktion eines bedingten Zugangs durch den Sicherheitsprozessors, wobei jede Basisfunktion eines bedingten Zugangs unabhängig von den anderen Basisfunktionen eines bedingten Zugangs ausgeführt wird, so dass durch die Nichtausführung einer Basisfunktion eines bedingten Zugangs die Ausführung irgendeiner anderen Basisfunktion eines bedingten Zugangs durch den Mikroprozessor nicht behindert wird.

8. Verfahren nach Anspruch 7, bei welchem das Verfahren umfasst:
- dass ein Speicher bereitgestellt wird, welcher zumindest ein Feld FIELDKEY enthält, das einem der kryptografischen Schlüssel zugeordnet ist, wobei das Feld FIELDKEY mehrere Zellen enthält, wobei eine jede der Zellen jeweils einer Basisfunktion eines bedingten Zugangs entspricht, und
- dass für die Verwendung des dem Feld FIELDKEY zugeordneten kryptografischen Schlüssels durch eine Basisfunktion eines bedingten Zugangs in Abhängigkeit von dem Wert der Zelle, welche in dem Feld FIELDKEY enthalten ist und der betreffenden Basisfunktion eines bedingten Zugangs entspricht, eine Berechtigung oder Verweigerung erteilt wird.

9. Verfahren nach Anspruch 7 oder 8, bei welchem das Verfahren umfasst:
- dass ein Speicher, der zumindest eine aus den folgenden Listen ausgewählte Liste enthält, bereitgestellt wird:
• eine den nicht vertraulichen EMM-Nachrichten zugeordnete Liste FIELDPIEMM, wobei die Liste FIELDPIEMM mehrere Zellen enthält, wobei eine jede der Zellen jeweils einem Parameter Pᵢ, der in einer nicht vertraulichen EMM-Nachricht enthalten sein kann, entspricht,
• eine den vertraulichen EMM-Nachrichten zugeordnete Liste FIELDPIEMMC (Entitlement Management Message Confidential), wobei die Liste FIELDPIEMMC mehrere Zellen enthält, wobei eine jede der Zellen jeweils einem Parameter Pᵢ, der in einer vertraulichen EMM-Nachricht enthalten sein kann, entspricht, und
• eine den ECM-Nachrichten zugeordnete Liste FIELDPIECM, wobei die Liste FIELDPIECM mehrere Zellen enthält, wobei eine jede der Zellen jeweils einem Parameter Pᵢ, der in einer ECM-Nachricht enthalten sein kann, entspricht, und
- dass für die Verarbeitung eines Parameters Pᵢ, der in einer von dem Sicherheitsprozessor empfangenen Nachricht enthalten ist, in Abhängigkeit von dem Wert der Zelle, die diesem Parameter in der der betreffenden Nachricht zugeordneten Liste entspricht, eine Berechtigung bzw. Verweigerung erteilt wird.

10. Verfahren nach einem der Ansprüche 7 bis 9, bei welchem das Verfahren umfasst:
- dass ein Speicher bereitgestellt wird, welcher eine den Basisfunktionen eines bedingten Zugangs zugeordnete Liste FIELDFCT umfasst, wobei die Liste FIELDFCT mehrere Zellen enthält, wobei eine jede der Zellen jeweils einer Basisfunktion eines bedingten Zugangs entspricht, und
- dass für die Ausführung einer Basisfunktion eines bedingten Zugangs in Abhängigkeit von dem Wert der in der Liste FIELDFCT enthaltenen Zelle, welche der betreffenden Basisfunktion eines bedingten Zugangs entspricht, eine Berechtigung bzw. Verweigerung erteilt wird.

11. Verfahren nach einem der Ansprüche 7 bis 10, bei welchem das Verfahren umfasst, dass für eine jede Zelle ein Standard-Ausgangswert dergestalt konfiguriert wird, dass in Antwort auf den Empfang der ersten EMM- oder ECM-Nachricht, welche von der Kopfstelle gesendet wird, für keinen einzigen besonderen Vorgang eine Verweigerung erteilt wird.

12. Verfahren nach einem der Ansprüche 7 bis 11, bei welchem das Verfahren umfasst:
- dass in ein und derselben EMM-Nachricht Folgendes empfangen wird:
• ein erster Parameter, welcher das Umschalten des Wertes der ersten Zelle auslöst, um für einen besonderen Vorgang des Sicherheitsprozessors eine Berechtigung zu erteilen,
• ein zweiter Parameter, welcher die Ausführung des besonderen Vorgangs auslöst, und
• ein dritter Parameter, welcher das Umschalten des Wertes der ersten Zelle auslöst, um für den besonderen Vorgang eine Verweigerung zu erteilen, und
- dass die Verarbeitung des ersten, des zweiten und des dritten Parameters durch den Sicherheitsprozessor der Reihenfolge nach erfolgt.

13. Verfahren nach einem der Ansprüche 7 bis 12, bei welchem sich die Basisfunktion eines bedingten Zugangs von einer Anmeldefunktion neuer Zugangsberechtigungen und von einer Anmeldefunktion neuer kryptografischer Schlüssel unterscheidet.

14. Datenaufzeichnungsmedium, welches Befehle für die Ausführung eines Konfigurationsverfahrens gemäß einem der Ansprüche 7 bis 13 enthält, wenn die Befehle von einem Mikroprozessor eines Sicherheitsprozessors ausgeführt werden.
